# EUROPÄISCHE PATENTSCHRIFT

(11) **EP 1 591 659 B1**
(45) Veröffentlichungstag und Bekanntmachung des Hinweises auf die Patenterteilung: **20.08.2008**
(21) Anmeldenummer: 05101760.6
(22) Anmeldetag: 08.03.2005
(51) Int. Cl.: F04B 1/04, F04B 53/12

(54) **Kolbenpumpe mit verbessertem Führungsverhalten**
Piston pump with improved guidance
Pompe a pistons avec guidage amélioré

(30) Priorität: 27.04.2004 DE 102004020548
(43) Veröffentlichungstag der Anmeldung: 02.11.2005
(73) Patentinhaber: ROBERT BOSCH GMBH, 70442 Stuttgart (DE)
(72) Erfinder: Alaze, Norbert, 71706, Markgroeningen (DE); Schuller, Wolfgang, 74389, Cleebronn (DE); Kratzer, Dietmar, 71732, Tamm (DE); Mueller, Waldemar, 71696, Moeglingen (DE); Hofmann, Dietmar, 87509, Immenstadt (DE); Wagner, Juergen, 87549, Rettenberg-Freidorf (DE); Finzer, Thorsten, 87435, Kempten (DE); Stuerner, Sibylle, 70839, Gerlingen (DE)

(56) Entgegenhaltungen:
- WO-A-03/004872
- US-B1- 6 224 352
- US-B1- 6 283 733
- US-B1- 6 302 663

## Beschreibung

### Stand der Technik

Die vorliegende Erfindung betrifft eine Kolbenpumpe mit verbessertem Führungsverhalten, welche insbesondere in einer Bremsanlage für ein Fahrzeug verwendet wird, siehe z.B. US 6 224 352.

Kolbenpumpen sind aus dem Stand der Technik in unterschiedlichen Ausgestaltungen bekannt. Als Kolbenpumpen für Fahrzeugbremsanlagen werden häufig Radialkolbenpumpen verwendet, bei denen wenigstens ein Kolben mittels eines Exzenters hin- und herbewegbar ist. Hierbei ist es bekannt, am Kolben ein separates Bauteil aus Kunststoff zu befestigen, an welchem ein Einlassventilsitz ausgebildet ist. Das derart gebildete Kolbenelement kann dabei in einer Laufbuchse geführt werden, wobei mehrere Führungsringe und Dichtringe vorgesehen sind. Um die Kolbenpumpe vor Verunreinigungen in dem zu fördernden Fluid zu schützen, ist weiterhin im Bereich des Einlasses in die Kolbenpumpe ein Filter vorgesehen. Das Filter kann dabei in einer Zuführleitung angeordnet sein oder in einem Bereich des Fluidweges vor dem Kolben angeordnet sein, um Verunreinigungen aus dem Fluid herauszufiltern.

Nachteilig bei den bekannten Kolbenpumpen ist, dass die Kolbenpumpen eine Vielzahl von Einzelteilen aufweisen, so dass ihre Herstellung und insbesondere auch ihre Montage sehr aufwendig und kostenintensiv ist. Weiterhin kann es aufgrund der Vielzahl von Einzelteilen zu Fehlern bei der Montage kommen. Darüber hinaus müssen bei Verwendung von Führungsringen hohe Toleranzanforderungen der einzelnen Bauteile erfüllt werden, um eine exakte Kolbenführung und damit einen hohen Wirkungsgrad zu ermöglichen.

### Vorteile der Erfindung

Die erfindungsgemäße Kolbenpumpe mit den Merkmalen des Patentanspruchs 1 weist demgegenüber den Vorteil auf, dass der Kolben einerseits in einem Zylinderelement wie z.B. einer Laufbuchse, und andererseits in einem zweiten separaten Führungselement geführt ist. Dabei ist zusätzlich in das zweite Führungselement noch ein Filter integriert, um zur Kolbenpumpe strömendes Fluid zu filtern. Der Kolben der Kolbenpumpe ist dabei derart ausgebildet, dass er eine Sacklochbohrung und eine in die Sacklochbohrung mündende Querbohrung aufweist, wobei zuströmendes Fluid von einem Einlass der Kolbenpumpe über das Filter und die Querbohrung in die Sacklochbohrung geführt wird. Nach der Sacklockbohrung ist dann ein Einlassventil angeordnet, über welches zugeführtes Fluid in einen Kolbenraum gelangt. Erfindungsgemäß ist somit ein Filter in ein Führungselement integriert und der Fluidweg ist durch den Kolben vorgesehen. Dadurch kann einerseits ein besonders kompakter Aufbau mit einer minimalen Teileanzahl realisiert werden und andererseits kann eine verbesserte Führung für den Kolben bereitgestellt werden, da der Kolben an zwei Bereichen geführt ist.

Die Unteransprüche zeigen vorteilhafte Weiterbildungen der Erfindung.

Ein besonders kompakter Aufbau kann dadurch realisiert werden, dass an dem offenen Ende der Sacklochbohrung des Kolbens ein Ventilsitz ausgebildet ist.

Erfindungsgemäß umfasst das zweite Führungselement der Kolbenpumpe zusätzlich noch einen integralen Dichtungsbereich. Der Dichtungsbereich stellt dabei eine Abdichtung am Zylinderelement bereit. Besonders bevorzugt ist dabei der Dichtungsbereich des zweiten Führungselements in einem abgestuften Bereich des Zylinderelements angeordnet und weist eine nutförmige Aussparung auf. Die nutförmige Aussparung ist vorzugsweise V-förmig oder U-förmig ausgebildet, wobei bevorzugt einer der beiden Schenkel etwas kürzer als der andere ist. Durch diese Ausgestaltung ist es möglich, dass die Abdichtung zwischen dem zweiten Führungselement und dem Zylinderelement verbessert wird, da in der nutförmigen Aussparung unter Druck stehendes Fluid für eine zusätzliche Abdichtung sorgen kann. Das unter Druck stehende Fluid wird zur Ausnehmung über den Spalt zwischen Kolben und Zylinderelement zugeführt. Es sei angemerkt, dass die beiden Schenkel auch gleich lang sein können, was auch eine sehr gute Abdichtung bereitstellt.

Ein besonders kompakter Aufbau insbesondere in Axialrichtung des Kolbens wird erhalten, wenn die Sacklochbohrung vorzugsweise mittels eines Flachventils freigebbar bzw. verschließbar ist.

Vorzugsweise ist ein weiteres Dichtelement vorgesehen, welches eine Abdichtung an dem dem Ventil gegenüberliegenden Ende des Kolbens bereitstellt. Besonders bevorzugt ist dieses weitere Dichtelement dabei einstückig am zweiten Führungselement gebildet. Dadurch kann die Teilezahl reduziert werden und ein besonders einfacher Aufbau erhalten werden. Wenn das weitere Dichtelement als separates Element vorgesehen ist, ist es besonders bevorzugt ein Dichtring (O-Ring) o.ä.

Um das zweite Führungselement mit den Mehrfachfunktionen besonders kostengünstig herstellen zu können, ist es als Kunststoffspritzteil ausgebildet. Das Filter kann dabei als Einlegeteil mit umspritzt werden oder in das fertige Kunststoffspritzteil eingeclipst werden. Die Führungs-und/oder Dichtungsbereiche sind integral am Führungselement gebildet.

Die erfindungsgemäße Kolbenpumpe wird besonders bevorzugt in Bremsanlagen von Fahrzeugen beispielsweise zum Steuern des Drucks in Radbremszylindern verwendet. Die Kolbenpumpe kann dabei sowohl zum Fördern von Bremsflüssigkeit in einen Radbremszylinder als auch zur Rückförderung der Bremsflüssigkeit aus einem Radbremszylinder verwendet werden. Weiterhin kann die erfindungsgemäße Kolbenpumpe auch in anderen Hydraulikanwendungen im Fahrzeug verwendet werden.

### Zeichnung

Die Erfindung wird nachfolgend anhand eines bevorzugten Ausführungsbeispiels im Detail beschrieben. In der Zeichnung ist:

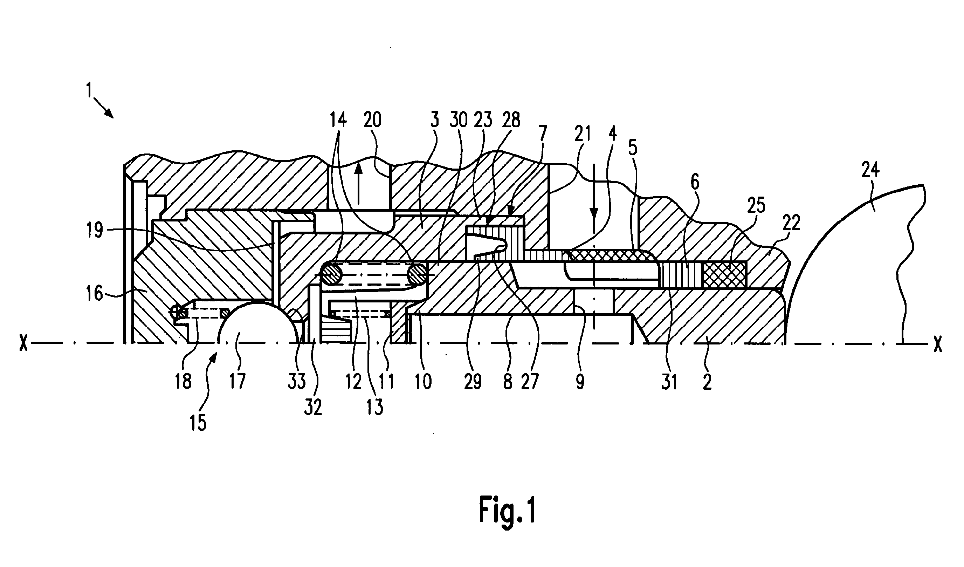

- Figur 1: eine schematische Schnittansicht einer Kolbenpumpe gemäß einem bevorzugten Ausführungsbeispiel der Erfindung.

### Beschreibung des Ausführungsbeispiels

Nachfolgend wird unter Bezugnahme auf die Figur 1 eine Kolbenpumpe 1 gemäß einem Ausführungsbeispiel der Erfindung beschrieben.

Wie in Figur 1 gezeigt, umfasst die Kolbenpumpe einen Kolben 2, welcher in einem Gehäuse 22 angeordnet ist. Die Kolbenpumpe 1 ist als Radialkolbenpumpe ausgebildet und wird mittels eines schematisch dargestellten Exzenters 24 in Längsrichtung X-X des Kolbens in bekannter Weise hin- und herbewegt. Im Gehäuse 22 ist ferner ein Verschlusselement 16 vorgesehen, welches den Aufnahmebereich des Pumpenelements im Gehäuse 22 verschließt.

Wie in Figur 1 gezeigt, ist der Kolben 2 in einem Zylinderelement 3 teilweise geführt. Das Zylinderelement 3 ist beispielsweise als Laufbuchse ausgebildet, so dass zwischen dem Zylinderelement 3 und dem Kolben ein erster Führungsbereich 30 ausgebildet ist. Ferner ist benachbart zum Zylinderelement 3 ein Führungselement 4 vorgesehen, welches mit dem Kolben 2 einen zweiten Führungsbereich 31 bildet. Zur Führung des Kolbens 2 ist am Führungselement 4 integral ein Führungsabschnitt 6 ausgebildet. Weiterhin ist am Führungselement 4 ein Dichtungsbereich 7 gebildet, welcher eine Abdichtung zwischen dem Führungselement 4 und dem Zylinderelement 3 bereitstellt. Das Führungselement 4 ist aus Kunststoff hergestellt und umfasst ferner ein Filter 5, welches integral mit dem Führungselement 4 gebildet ist.

Wie in Figur 1 gezeigt, ist der Dichtungsbereich 7 in einem abgestuften Bereich 23 des Zylinderelements 3 angeordnet. Der abgestufte Bereich 23 ist dabei als ringförmig umlaufende Ausnehmung gebildet. Der Dichtungsbereich 7 des Führungselements 4 umfasst dabei eine nutförmige Aussparung 27, welche durch einen ersten Schenkel 28 und einen zweiten Schenkel 29 gebildet wird. Die nutförmige Aussparung weist dabei im Wesentlichen im Schnitt eine V-Form auf. Weiter ist der zweite Schenkel 29 etwas kürzer als der erste Schenkel 28 ausgebildet. Durch diese Maßnahme kann eine verbesserte Abdichtung erreicht werden, da unter Druck stehendes Fluid über den Spalt am ersten Führungsbereich 30 in die nutförmige Aussparung 27 gelangen kann und somit ein größerer Anpressdruck des Dichtungsbereichs 7 gegen den abgestuften Bereich 23 erhalten wird.

Wie weiter aus Figur 1 ersichtlich ist, ist im Kolben 2 eine Sacklochbohrung 8 und eine in die Sacklochbohrung 8 mündende Querbohrung 9 ausgebildet. Am offenen Ende der Sacklochbohrung 8 ist ein Ventilsitz 10 am Kolben 2 gebildet. Der Ventilsitz 10 wird mittels eines Flachventils 11 verschlossen bzw. geöffnet. Das Flachventil 11 ist in einem Ventilkäfig 12 angeordnet und wird mittels einer Ventilschließfeder 13 in der in Figur 1 gezeigten Ausgangsstellung gehalten. Somit ist das Einlassventil als Flachventil ausgebildet. Weiterhin ist eine Kolbenrückstellfeder 14 vorgesehen, um den Kolben 2 in seine Ausgangsposition zurückzustellen. Die Kolbenrückstellfeder 14 stützt sich dabei an einem Absatz am Zylinderelement 3 ab. Ferner umfasst die Kolbenpumpe 1 ein Auslassventil 15 in Form eines federbelasteten Rückschlagventils. Das Auslassventil 15 umfasst eine Ventilkugel 17 und eine Ventilschließfeder 18. Die Ventilschließfeder 18 stützt sich dabei am Verschlusselement 16 ab. Ein Ventilsitz 33 des Auslassventils 15 ist am Zylinderelement 3 gebildet. Über einen Radialkanal 19 wird das von der Kolbenpumpe geförderte Fluid zu einem Auslass 20 geführt. In Figur 1 bezeichnet das Bezugszeichen 21 den Einlass der Kolbenpumpe. Die Strömung des Fluids ist dabei durch Pfeile gekennzeichnet.

Ferner ist am Kolben 2 an dem zum Ventilsitz 10 entgegengesetzten Ende ein weiteres Dichtelement 25 angeordnet. Das Dichtelement 25 ist unmittelbar benachbart zum Führungsabschnitt 6 des Führungselements 4 angeordnet und kann beispielsweise als O-Ring ausgebildet sein. Es sei angemerkt, dass das Dichtelement 25 auch einstückig mit dem Führungselement 4 gebildet sein kann.

Die Arbeitsweise der erfindungsgemäßen Kolbenpumpe 1 ist dabei wie folgt. Fluid wird über den Einlass 21 angesaugt, wenn sich der Kolben 2 durch Drehen des Exzenters 24 in seiner Axialrichtung X-X bewegt. Das Fluid wird dabei durch das Filter 5 geführt und über die Querbohrung 9 und die Sacklochbohrung 8 zum Flachventil 11 geführt.

Wenn der Kolben von der in Figur 1 gezeigten Ausgangsstellung nach links bewegt wird, wird dabei das Fluid, welches sich in einem Kolbenraum 32 zwischen dem Flachventil 11 und der Ventilkugel 17 befindet, unter Druck gesetzt. Sobald der Druck im Kolbenraum 32 größer als die Kraft der Ventilschließfeder 18 ist, wird die Ventilkugel 17 nach links bewegt, so dass das im Kolbenraum 32 befindliche Fluid über den Radialkanal 19 zum Auslass 20 strömen kann. Nach dem Erreichen des oberen Totpunkts kehrt sich die Bewegungsrichtung des Kolbens 2 um, so dass die Ventilkugel 17 mittels der Ventilschließfeder 18 wieder in ihre Ausgangsstellung gebracht wird. Gleichzeitig wird das Flachventil 11 von seinem Ventilsitz 10 abgehoben, so dass Fluid wieder in den Kolbenraum 32 strömen kann.

Da die erfindungsgemäße Kolbenpumpe 1 den Kolben 2 sowohl am Zylinderelement 3 am ersten Führungsbereich 30 als auch am Führungselement 4 am zweiten Führungsbereich 31 führt, wird der Kolben 2 an zwei unterschiedlichen Punkten geführt. Das Führungselement 4 weist dabei nicht nur die Funktion der Führung auf, sondern zusätzlich auch noch eine Filterfunktion durch das integrierte Filter 5 und eine Abdichtungsfunktion am Dichtungsbereich 7. Somit wird erfindungsgemäß ein multifunktionales Bauteil verwendet, so dass die Zahl der Einzelteile deutlich reduziert werden kann.

Das Führungselement 4 ist vorzugsweise aus Kunststoff hergestellt, so dass das Filter 5 einfach angespritzt werden kann. Weiterhin kann durch diese konstruktive Gestaltung der Führungsabschnitt 6 vor dem Dichtelement 25 angeordnet werden. Dadurch ergibt sich der Vorteil, dass der Führungsbereich 6 während des Betriebes der Kolbenpumpe 1 immer mit dem Fluid, z.B. der Bremsflüssigkeit, in Kontakt steht und somit ständig geschmiert werden kann. Somit kann eine Verschleißminimierung des Führungsbereichs 6 erreicht werden. Da weiterhin der Kolben 2 zusätzlich noch am Zylinderelement 3 geführt wird, wird eine verbesserte Führung erreicht. Weiterhin kann die Lebensdauer der erfindungsgemäßen Kolbenpumpe durch diese Maßnahmen verbessert werden.

Da derartige Kolbenpumpen insbesondere in Bremsanlagen von Fahrzeugen verwendet werden, kann durch die erfindungsgemäße Ausgestaltung eine signifikante Kostenreduzierung erreicht werden, welche sich insbesondere bei derartigen Massenbauteilen in großem Umfang bemerkbar macht. Dabei weist die erfindungsgemäße Kolbenpumpe 1 einen besonders kompakten Aufbau mit einer minimalen Teileanzahl auf.

Derartige Kolbenpumpen können beispielsweise in ESP- oder EHB-Anlagen verwendet werden.

## Patentansprüche

1. Kolbenpumpe mit einem hin- und her bewegbaren Kolben (2), der eine Sacklochbohrung (8) und eine in die Sacklochbohrung (8) mündende Querbohrung (9) aufweist,
mit einem Zylinderelement (3), in welchem der Kolben (2) zumindest teilweise geführt ist und das zusammen mit dem Kolben (2) einen Kolbenraum (32) begrenzt und
einem separaten zweiten Führungselement (4),
mit einem Führungsabschnitt (6), in welchem der Kolben (2) geführt ist und einem Filterbereich, an welchem ein Filter (5) in das Führungselement (4) integriert ist, und wobei Fluid vom Einlass (21) durch das Filter (5) und die Querbohrung (9) in die Sacklochbohrung (8) einströmt,
**dadurch gekennzeichnet,**
**dass** das zweite Führungselement (4) einen Dichtungsbereich (7) umfasst, welcher eine Abdichtung für den Kolbenraum (32) am Zylinderelement (3) bereitstellt.

2. Kolbenpumpe nach Anspruch 1, **dadurch gekennzeichnet, dass** am offenen Ende der Sacklochbohrung (8) ein Ventilsitz (10) ausgebildet ist.

3. Kolbenpumpe nach Anspruch 1 oder 2, **dadurch gekennzeichnet, dass** der Dichtungsbereich (7) in einem abgestuften Bereich (23) des Zylinderelements (3) angeordnet ist und eine nutförmige Aussparung (27) aufweist.

4. Kolbenpumpe nach Anspruch 3, **dadurch gekennzeichnet, dass** die nutförmige Aussparung (27) V-förmig oder U-förmig ausgebildet ist.

5. Kolbenpumpe nach Anspruch 3 oder 4, **dadurch gekennzeichnet, dass** der Dichtungsbereich (7) mit der nutförmigen Aussparung einen leicht verkürzten Schenkel (29) aufweist.

6. Kolbenpumpe nach einem der vorhergehenden Ansprüche, **dadurch gekennzeichnet, dass** die Sacklochbohrung (8) mittels eines Flachventils (11) freigebbar und verschließbar ist.

7. Kolbenpumpe nach einem der vorhergehenden Ansprüche, **gekennzeichnet durch** ein weiteres Dichtelement (25), Welches eine Abdichtung an dem dem Ventilsitz (10) gegenüberliegenden Ende des Kolbens (2) bereitstellt.

8. Kolbenpumpe nach einem der vorhergehenden Ansprüche, **dadurch gekennzeichnet, dass** das Führungselement (4) ein Kuriststoffspritzteil ist.

9. Bremsanlage oder Stabilitätssystem für Fahrzeuge mit einer Kolbenpumpe nach einem der vorhergehenden Ansprüche.

## Claims

1. Piston pump having a piston (2) which can move in a reciprocating fashion and which has a blind bore (8) and a transverse bore (9) which opens out into the blind bore (8),
having a cylinder element (3) in which the piston (2) is at least partially guided and which, together with the piston (2), delimits a piston space (32), and
having a separate second guide element (4),
having a guide section (6) in which the piston (2) is guided and having a filter region at which a filter (5) is integrated into the guide element (4), and with fluid flowing from the inlet (21) through the filter (5) and the transverse bore (9) into the blind bore (8),
**characterized**
**in that** the second guide element (4) comprises a seal region (7) which provides sealing for the piston space (32) against the cylinder element (3).

2. Piston pump according to Claim 1, **characterized in that** a valve seat (10) is formed at the open end of the blind bore (8).

3. Piston pump according to Claim 1 or 2, **characterized in that** the seal region (7) is arranged in a stepped region (23) of the cylinder element (3) and has a groove-shaped cutout (27).

4. Piston pump according to Claim 3, **characterized in that** the groove-shaped cutout (27) is of V-shaped or U-shaped design.

5. Piston pump according to Claim 3 or 4, **characterized in that** the seal region (7) with the groove-shaped cutout has one slightly shortened limb (29).

6. Piston pump according to one of the preceding claims, **characterized in that** the blind bore (8) can be opened and closed off by means of a flat valve (11).

7. Piston pump according to one of the preceding claims, **characterized by** a further sealing element (25) which provides sealing against the opposite end of the piston (2) from the valve seat (10).

8. Piston pump according to one of the preceding claims, **characterized in that** the guide element (4) is a plastic injection-moulded part.

9. Brake system or stability system for vehicles having a piston pump according to one of the preceding claims.

## Revendications

1. Pompe à piston comportant un piston (2) à mouvement alternatif, ayant un perçage borgne (8) et un perçage transversal (9) débouchant dans le perçage borgne (8),
un élément de cylindre (3) dans lequel le piston (2) est guidé au moins partiellement et qui délimite une chambre de piston (32) avec le piston (2), et
un second élément de guidage (4), distinct,
un segment de guidage (6) dans lequel le piston (2) est guidé et une zone de filtre dans laquelle un filtre (5) est intégré dans l'élément de guidage (4), le fluide arrivant de l'entrée (21) à travers le filtre (5) et le perçage transversal (9) dans le perçage borgne (8),
**caractérisée en ce que**
le second élément de guidage (4) comporte une zone d'étanchéité (7) qui assure l'étanchéité de la chambre de piston (32) sur l'élément de cylindre (3).

2. Pompe à piston selon la revendication 1,
**caractérisée par**
un siège de soupape (10) réalisé à l'extrémité ouverte du perçage borgne (8).

3. Pompe à piston selon la revendication 1 ou 2,
**caractérisée en ce que**
la zone d'étanchéité (7) est installée dans une zone étagée (23) de l'élément de cylindre (3) et comporte une cavité (27) en forme de rainure.

4. Pompe à piston selon la revendication 3,
**caractérisée en ce que**
la cavité (27) en forme de rainure a une section en V ou en U.

5. Pompe à piston selon la revendication 3 ou 4,
**caractérisée en ce que**
la zone d'étanchéité (7) présente une branche (29) légèrement raccourcie pour la cavité en forme de rainure.

6. Pompe à piston selon l'une des revendications précédentes,
**caractérisée en ce que**
le perçage borgne (8) se libère ou se ferme à l'aide d'une soupape plate (11).

7. Pompe à piston selon l'une des revendications précédentes,
**caractérisée par**
un autre élément d'étanchéité (25) qui assure l'étanchéité contre l'extrémité du piston (2) en regard du siège de soupape (10).

8. Pompe à piston selon l'une des revendications précédentes,
**caractérisée en ce que**
l'élément de guidage (4) est une pièce en matière plastique injectée.

9. Installation de frein ou système de stabilisation de véhicule comportant une pompe à piston selon l'une des revendications précédentes.
